# EUROPÄISCHE PATENTANMELDUNG

(11) **EP 4 418 374 A1**
(43) Veröffentlichungstag der Anmeldung: **21.08.2024**
(21) Anmeldenummer: 23157099.5
(22) Anmeldetag: 16.02.2023
(51) Int. Cl.: H01M 8/0247, C25B 15/023, H01M 8/04537, H01M 8/2432

(54) **MESSEINRICHTUNG FÜR EINE ELEKTROLYSE**

(71) Anmelder: Sunfire GmbH, 01237 Dresden (DE); Vitesco Technologies GmbH, 93055 Regensburg (DE)
(72) Erfinder: Schade, Christoph, 01445 Radebeul (DE); Strohbach, Thomas, 01309 Dresden (DE); Surrey, Alexander, 01219 Dresden (DE); Vandercruysse, Felix, 80339 München (DE)
(74) Vertreter: Hauck Patentanwaltspartnerschaft mbB

(57) **Zusammenfassung**

Messeinrichtung zur elektrischen Spannungsmessung in einem Stack von übereinander in Ebenen angeordneten Membran-Elektroden-Einheiten (MEA), die jeweils zur Spannungsmessung mindestens eine Kontaktfläche aufweisen, die außen am Stack zugänglich angeordnet ist, wobei die Messeinrichtung eine Halterung besitzt, in der eine schwenkbare Messplatte mit separaten Kontaktelementen gelagert ist, von denen eine Vielzahl über jeweils eine Kontaktleitung mit einer Messauswertung elektrisch leitend verbunden ist, um die an dem jeweiligen Kontaktelement anliegende elektrische Spannung an die Messauswertung anzulegen, wobei die Messplatte in der Halterung in eine Messposition verschwenkt werden kann und die Kontaktelemente elastisch verformbar ausgebildet sind und in der Messposition unter Verspannen an den Kontaktflächen anliegen.

## Beschreibung

Die Erfindung bezieht sich auf das Gebiet der Elektrolyse und betrifft eine Messeinrichtung, wie sie beispielsweise in Hochtemperaturelektrolyseanlagen, in anderen Elektrolyseanlagen aber auch in Brennstoffzellenstapeln eingesetzt werden kann.

Die Hochtemperaturelektrolyse ist ein Elektrolyseverfahren zur Gewinnung von Wasserstoff aus Wasser bei hohen Temperaturen. Eine anderes Elektrolyseverfahren zur Gewinnung von Wasserstoff aus Wasser ist beispielsweise das Protonenaustauschmembran(PEM)-Elektrolyseverfahren. Brennstoffzellen, beispielsweise in der PEM-Technologie, sind sehr ähnlich aufgebaut. Eine Elektrolyseanlage oder ein Brennstoffzellenstapel besteht aus mehreren Membran-Elektroden-Einheiten (kurz MEA für membrane-electrode-assembly), wobei jede dieser MEA als eine Ebene betrachtet werden kann. Zwischen diesen Ebenen sind Interkonnektoren (oder Bipolarplatten) angeordnet. Eine Vielzahl dieser MEAs und Interkonnektoren werden gestapelt auch als Stack bezeichnet. Stacks können mehr als 900 Ebenen aufweisen.

In der Industrialisierung und Upscaling von Festoxid-Elektrolysezellen (SOEC) werden aus Gründen der Skalierbarkeit Stacks mit 900 und mehr Einzelebenen benötigt. Deren initiale Überprüfung auf Funktionalität nach der Fügung stellt eine große technische Herausforderung dar, da jede einzelne Ebene einen Spannungsabgriff benötigt. Die Messung muss dabei im Heißbetrieb bei über 800°C stattfinden. Durch diese Messung der Einzelspannungen können defekte Ebenen identifiziert und aus dem Strompfad entfernt werden. Außerdem sind Aussagen, über den Widerstand und die Dichtigkeit für jede Ebene machbar.

Als Hochtemperaturelektrolyse wird nachfolgend eine Elektrolyse im Temperaturbereich zwischen 600 °C und 1000 °C, insbesondere 800 °C und 950 °C betrachtet. Jedoch ist die Hochtemperaturanalyse nicht auf diesen Temperaturbereich beschränkt, sondern kann auch bei Temperaturen bis 1400°C durchgeführt werden.

Derzeit werden stoffschlüssige Verbindungen, üblicherweise durch Schweißen, von Einzeldrähten, meist aus Platin, mit den jeweiligen Stackebenen hergestellt. Dies ist ein sehr zeitaufwändiger und mühsamer, händischer Prozess. Daher funktioniert diese Umsetzung nur bei kleineren Stacks mit hohen (dicken) Bipolarplatten. Eine derartige Kontaktierung von 900 oder mehr Ebenen würde Wochen dauern und ist daher keine wirtschaftliche Option. In der Serienproduktion müssen diese Kontaktierungen mehrmals täglich stattfinden.

Gemäß der US 2012/0225366 A1 (Teradyne) ist ein Prüfsystem zum Prüfen einer Einheit, wie z.B. mehrerer Festoxid-Brennstoffzellen bekannt. Das Prüfsystem umfasst eine thermische Prüfkammer, in der eine berührungslose elektrostatische Spannungssonde zum Abtasten der Festoxid-Brennstoffzellen angebracht ist. Das Prüfsystem umfasst ferner einen Detektor, der mit der Spannungssonde verbunden ist, um ein Ausgangssignal oder eine Anzeige auf der Grundlage der gemessenen Spannungen zu erzeugen. Die gemessenen Spannungen werden verarbeitet, um eine repräsentative Spannung für jede Brennstoffzelle zu berechnen und defekte Brennstoffzellen auf der Grundlage der gemessenen Spannungen zu identifizieren. Das Testsystem kann bei der Herstellung von Festoxid-Brennstoffzellenstapeln eingesetzt werden, um kostengünstige Tests zur Reduzierung der Herstellungskosten zu ermöglichen.

Eine Vorrichtung zur Messung der Spannung einer Brennstoffzelle ist aus der US 2007/0108960 A1 (ITRI) bekannt geworden. Die Vorrichtung besitzt einen Hauptträger, der an jeder Seite einen Querschlitz aufweist, eine Vielzahl von Gleitstücken, die gleitend in den Querschlitzen des Hauptträgers aufgenommen sind, eine Vielzahl von zurückziehbaren Sondenanordnungen, die separat an den Gleitstücken zum Kontakt mit einer Brennstoffzelle angebracht sind, und eine Spannungssignal-Aufnahmeeinheit, die an einer Oberseite des Hauptträgers angebracht ist, um eine elektrische Verbindung mit den zurückziehbaren Sondenanordnungen herzustellen, um Spannungssignale der Brennstoffzelle aufzunehmen, die von den zurückziehbaren Sondenanordnungen gemessen werden.

Eine Prüfvorrichtung für einen Brennstoffzellenstapel ist auch aus der DE 10 2017 212 884 A1 (BMW) bekannt, wobei der Brennstoffzellenstapel mehrere entlang einer Stapelachse gestapelte Brennstoffzellen umfasst, die jeweils Medienöffnungen in Form von Durchgangsausnehmungen aufweisen, und wobei im gestapelten Zustand entsprechende Medienöffnungen zur Bildung von Medienleitungen fluchten, wobei die Prüfvorrichtung folgendes aufweist: einen in eine Medienleitung einführbaren Stab und zumindest ein am Stab angeordnetes Dichtelement zum Abdichten der Medienleitung, um zumindest eine Brennstoffzelle des Brennstoffzellenstapels von den restlichen Brennstoffzellen zu trennen. Ferner ist zumindest ein mit dem Stab einführbares Kontaktelement zum elektrischen Kontaktieren einer einzelnen Brennstoffzelle innerhalb der Medienleitung vorgesehen.

Eine Messeinrichtung, die den Messkopf in einer Schwingbewegung zur einzelnen Messung an den Stack führt und die Messeinrichtung linear am Stack hoch- und runterfährt, ist aus US 2013/0029245 A1 (Bloom) bekannt geworden.

Aus US 2007/0154755 A1 (Ballard) ist ein Apparat zur elektrischen Messung an einer Mehrzahl von Zellen eines Multi-Zellen-elektrochemischen Gerätes, insbesondere einer Brennstoffzellenanordnung, bekannt geworden. Der Apparat weist einen halbleitenden Messstreifen, der mit mindestens einem Teil des Multi-Zellen-elektrochemischen Gerätes verbindbar ist, auf, wobei der Messtreifen die elektrischen Größen dieses Teils misst. Als Ausführungsbeispiel wird Zebragummi, ein elektrisch leitfähiges Polymer eingesetzt, welches jedoch nicht bei Temperaturen während des Betriebes einer Hochtemperaturelektrolyse eingesetzt werden kann.

Gemäß der US 2015/016263 A1 (Bloom) ist ein Brennstoffzellensystem mit einem Messsystem bekannt mit einem beweglichen Kontakt für eine mit Berührung durchgeführte oder berührungsfreie Spannungsmessung, wobei die Messung durch ein Heranführen des Messsensors durch eine geradlinige Bewegung des Sensorkopfes an den Stack erfolgt. Bei der Messung wird der Sensorkopf in einer geradlinigen Bewegung an eine oder mehrere zu messende Stackebenen herangeführt.

Nachteilig an den herkömmlichen Lösungen ist, dass die Messung vieler Stackebenen eines Stacks nicht im direkten Anschluss an das Fügen der MEAs zu einem Stack bei Temperaturen von mehr als 500 °C oder zeitgleich während des Betriebs einer Elektrolyse durchgeführt werden kann. Die Dicke der Bipolarplatten/Membranen bei SOEC-Anlagen beträgt ca. 0,7 mm, wodurch eine sehr kompakte Bauweise möglich ist.

Die Aufgabe der vorliegenden Erfindung besteht darin, eine Messeinrichtung bereitzustellen, die für die gleichzeitige Messung vieler Stackebenen während oder nach der Herstellung einer Brennstoffzellen- oder Elektrolyse-Anlage, insbesondere einer Hochtemperaturelektrolyse-Anlage geeignet ist.

Die Aufgabe wird durch die in den Ansprüchen angegebene Messeinrichtung gelöst. Vorteilhafte Ausgestaltungen sind Gegenstand der Unteransprüche.

Die erfindungsgemäße Messeinrichtung ist vorgesehen und geeignet zur elektrischen Spannungsmessung an einem Stack von übereinander in Ebenen alternierend angeordneten Membran-Elektroden-Einheiten (MEA) und Interkonnektoren. Jeder der Interkonnektoren besitzt mindestens eine Kontaktfläche, die von außen zugänglich an dem Stack angeordnet ist. Vorzugsweise sind die Interkonnektoren metallisch. Ferner besitzt die Messeinrichtung eine Halterung, in der eine schwenkbare Messplatte mit separaten Kontaktelementen gelagert ist. Von den separaten Kontaktelementen ist eine Vielzahl über jeweils eine Kontaktleitung mit einer Messauswertung elektrisch leitend verbunden. Über die Verbindung wird die an dem jeweiligen Kontaktelement anliegende elektrische Spannung an die Messauswertung angelegt. Bei der erfindungsgemäßen Messeinrichtung ist vorgesehen, dass die Messplatte in der Halterung in eine Messposition verschwenkt werden kann und die Kontaktelemente elastisch verformbar ausgebildet sind. Erfindungsgemäß ist vorgesehen, dass in der Messposition die Kontaktelemente unter Vorspannung an den Kontaktflächen anliegen. Mit der Messeinrichtung wird durch das Verschwenken der Messplatte in die Messposition eine Situation geschaffen, in der eine Vielzahl von Interkonnektoren gleichzeitig gemessen werden kann. Durch die Schwenkbewegung der in der Halterung gelagerten Messplatte gelangen die separaten Kontaktelemente in den einzelnen Ebenen des Stacks mit den Kontaktflächen der Interkonnektoren für den elektrischen Spannungsabgriff in Kontakt. Dies stellt insbesondere beim Herstellungsprozess eine deutliche Vereinfachung für die Qualitätskontrolle sicher.

Im Rahmen dieser Anmeldung soll der Begriff Interkonnektoren sowohl für Interkonnektoren als auch für Bipolarplatten verwendet werden. Die in dieser Anmeldung enthaltenen Ausführungen zu Interkonnektoren gelten entsprechend auch für Bipolarplatten.

In einer bevorzugten Ausgestaltung verformen sich die separaten Kontaktelemente in der Messposition elastisch, wobei die elastische Verformung durch das Andrücken der Kontaktelemente gegen die Kontaktflächen entsteht. Hierdurch wird sichergestellt, dass ein für eine leitende elektrische Verbindung ausreichender Kontakt hergestellt ist, um die Spannung zuverlässig und genau abzugreifen.

In einer weiter bevorzugten Ausgestaltung sind die Kontaktelemente in der Messposition um einen Winkel von 1° bis 60° verformt. Bevorzugt liegt eine Verformung von 1° bis 45° vor. Die Kontaktelemente verformen sich hierbei elastisch und kehren in ihre nicht verformte Stellung zurück, wenn die Messplatte aus der Messposition herausgedreht wurde.

In einer bevorzugten Ausgestaltung ist die Messplatte mit einer elektrisch nichtleitenden Oberfläche ausgestattet. Das Material kann dabei entweder aus einem nichtleitenden, z.B. keramischen, Material oder aus einem elektrisch leitfähigen, z.B. metallischen, Material mit einer elektrischen Isolierung als Beschichtung oder Überzug bestehen. Für den Spannungsabgriff an den Kontaktflächen des Stacks ist es wichtig, dass die separaten Kontaktelemente jeweils separat die Spannung an der Kontaktfläche erfassen. Dies schafft die Möglichkeit, für jede einzelne Ebene gesondert die elektrische Spannung zu erfassen und in der Messauswertung auszuwerten.

Es hat sich herausgestellt, dass es besonders vorteilhaft ist, wenn die Messplatte aus einem Material besteht, das eine vorbestimmte Wärmeausdehnung besitzt, die einer Wärmeausdehnung des Stacks entspricht. Auf diese Weise ist es möglich, auch bei hohen Temperaturen, bei denen die Wärmeausdehnung des Stacks und der Messplatte ins Gewicht fallen, den Kontakt zwischen den separaten Kontaktelementen an der Messplatte und den Kontaktflächen am Stack herzustellen.

In einer bevorzugten Ausgestaltung besitzt die Messplatte eine Dicke von 10 µm bis 3 mm. Diese Materialdicke erweist sich einerseits in thermischer Hinsicht, andererseits auch zur Drehung in der Halterung als besonders vorteilhaft.

Für die separaten Kontaktelemente ist bevorzugt eine Dicke von 10 µm bis 60 µm vorgesehen. Auch ist bevorzugt eine Länge der separaten Kontaktelemente von 1 bis 10 mm vorgesehen. Diese Abmessungen erlauben es, einzeln oder in Kombination, ein ausreichend elastisches Verhalten der separaten Kontaktelemente und auch die gewünschte Vorspannung an den Kontaktflächen herzustellen.

In einer bevorzugten Ausgestaltung ist die Halterung, die die Messplatte aufnimmt, aus einem temperaturstabilen Material hergestellt.

In einer bevorzugten Ausgestaltung ist mindestens eine der Kontaktleitungen, die mit der Messauswertung elektrisch leitend verbunden ist, durch eine Bohrung in der Messplatte oder in dem Kontaktelement zu dem entsprechenden Kontaktelement geführt. Auf diese Weise besteht die Möglichkeit, die Kontaktleitung auf der vom Stack abgewandten Seite der Messplatte oder des Kontaktelements zu führen und nur einen kurzen Abschnitt der Kontaktleitung auf der dem Stack zugewandten Seite zu führen. Bevorzugt können die Kontaktleitungen auf oder an das Kontaktelement gedrückt werden, beispielsweise mittels einer Schwenkbewegung der Messplatte.

In einer bevorzugten Ausgestaltung ist die Messplatte elastisch verformbar. Besonders bevorzugt besteht sie aus einem temperaturbeständigen Material, das in einem Temperaturbereich von 800 °C bis 1100 °C, besonders bevorzugt bis 980 °C, elastisch verformbar ist. Damit eignet sie sich insbesondere für die Anwendung bei Hochtemperaturanlagen. Das temperaturbeständige Material ist insbesondere Aluminiumoxid Al2O3, undotiertes Zirkonium-Oxid ZrOx, Yttrium-stabilisiertes Zirkonium-Dioxid 3YSZ oder eine metallische Legierung mit einer entsprechenden Isolierung. Bei der metallischen Legierung kann es sich beispielsweise um eine nickelbasierte Legierung handeln. Die elastische Verformbarkeit (in dem interessierenden Temperaturbereich) erlaubt es, in der Messposition die Vorspannung der separaten Kontaktelemente an den Kontaktflächen zu unterstützen. Die Vorspannung wird also nicht allein durch die Kontaktelemente, sondern unterstützend auch durch die Messplatte erzeugt.

In einer bevorzugten Ausgestaltung sind die Kontaktelemente jeweils an einer Messkontaktfläche, d.h. an einem Teil ihrer Oberfläche, der in Messposition mit einer Kontaktfläche einer Stackebene in Anlage kommt, elektrisch leitfähig beschichtet, z.B. mit einem halbleitenden Material oder einem Metall. Besonders eignet sich eine halbleitende Oxid-Keramik, wie beispielsweise unterstöchiometrisches Lanthan Strontium Mangan Cobalt Oxid (ULSMC), Lanthan Strontium Mangan Cobalt Oxid (LSMC), Mangan Cobalt Eisenoxid (MCF) oder Lanthan Strontium Manganit (LSM). Auch können Metalle aus der Platingruppe oder deren Legierungen verwendet werden, bevorzugt werden hier Platin, Rhodium und Ruthenium eingesetzt.

In einer weiter bevorzugten Ausgestaltung sind die Kontaktelemente mit einer Beschichtung mit Halbleiter-Keramikmaterial versehen, wobei dessen Kontaktwiderstand weniger als 1 MOhm beträgt, vorzugsweise zwischen 1 und 20 Ohm liegt. Diese Beschichtung der separaten Kontaktelemente kann vorgesehen sein, wenn metallische Kontakte vorgesehen sind. Es ist aber auch möglich, halbleitende Materialien zusätzlich zu beschichten.

In einer bevorzugten Weiterbildung ist die Halterung für die Messplatte mit Mitteln zur Höhenverstellung ausgestattet. Mit diesen Mitteln ist es möglich, die separaten Kontaktelemente in der Höhe relativ zu den Kontaktflächen des Stacks auszurichten und so sicherzustellen, dass sich ein elektrisch leitender Kontakt in der Messposition ergibt.

Die vorliegende Erfindung wird mit den beigefügten Zeichnungen näher erläutert. Es zeigen:
- Figur 1: die erfindungsgemäße Messeinrichtung in einem Stack mit ca. 30 Ebenen,
- Figur 2: eine Detailansicht einer in die Messposition gedrehten Messeinrichtung und
- Figur 3: eine Detailansicht der in Figur 2 dargestellten Halterung für die Messplatte.

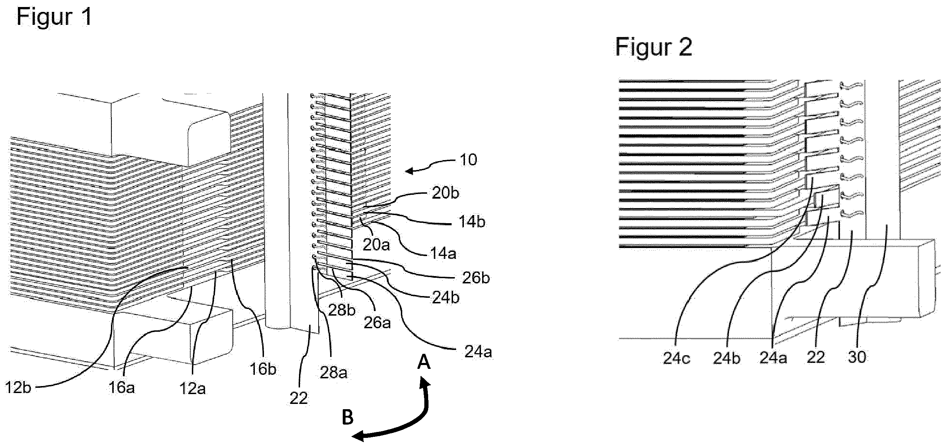

Figur 1 zeigt einen Stack 10 mit ca. 30 Ebenen von Membranelektrodenelementen mit ihren Interkonnektoren. Jede Ebene verfügt über eine Kontaktfläche 12a, b, etc. Nachfolgend stehen die Bezüge a, b stets für eine sich fortsetzende Reihe von Bezugszeichen.

Die Kontaktflächen sind übereinander angeordnet. In dem in Figur 1 dargestellten Ausführungsbeispiel besitzt der Stack zwei nebeneinander ausgeführte Reihen von Kontaktflächen, nämlich eine erste Reihe von Kontaktflächen 12a, b etc. und eine zweite Reihe von Kontaktflächen 14 a, b, etc. Wie in Figur 1 zu erkennen, besitzt ein Interkonnektor entweder eine Kontaktfläche, die zu den übereinander angeordneten Kontaktflächen 12 oder zu der zweiten Reihe von Kontaktflächen 14 gehört. Wie ebenfalls in Figur 1 zu erkennen, besitzen die an eine Kontaktfläche angrenzenden Interkonnektoren eine Aussparung. Angrenzend an die Kontaktfläche 12 besitzen die darüber und darunter angeordneten Interkonnektoren jeweils eine Aussparung 16a und eine Aussparung 16b. Auf diese Weise steht die Kontaktfläche 12a frei vor und kann einfacher kontaktiert werden. Die Situation stellt sich ebenso für die Kontaktflächen 14 a, b dar. Hier sind die Ausnehmungen 20 a, b, etc. ebenfalls oberhalb und unterhalb der Kontaktflächen 14 angebracht.

Zusammenfassend ergibt sich also ein Bild, wonach alternierend die Zellen eine Kontaktfläche entweder in der Reihe der Kontaktflächen 12 a, b und der Kontaktflächen 14 a, b besitzen. Mit den Aussparungen verhält es sich umgekehrt, sodass eine Interkonnektorplatte eine Aussparung in der Reihe der Kontaktflächen 12 besitzt, wenn sie selbst eine Kontaktfläche in der Reihe der Kontaktflächen 14 a, b besitzt. Durch die benachbarten Aussparungen entsteht Platz, um die Kontaktflächen des Stacks entweder in der Reihe 12 der Kontaktflächen oder in der Reihe 14 der Kontaktflächen zu kontaktieren.

Die Messung erfolgt über eine längliche Messplatte 22, die im Wesentlichen eine rechteckige Form besitzt. Die Messplatte 22 ist mit einer kammartigen Anordnung von separaten Kontaktelementen 24a, b ausgestattet. Jedes der separaten Kontaktelemente ist elektrisch gegenüber seinem benachbarten Kontaktelement isoliert. Zudem ist jeweils ein Schlitz 26a, b zwischen zwei separaten Kontaktelementen vorgesehen. Die Schlitze ermöglichen, dass die Kontaktelemente sich unabhängig voneinander verbiegen können. Die Kontaktelemente 24a, b sind jeweils über eine Leitung 28a, b mit der Messauswertung (nicht dargestellt) verbunden. Wird die Messplatte 22 in Richtung A verschwenkt, so werden die Kontaktflächen 14 kontaktiert, bei einer Bewegung in Richtung B die Kontaktflächen 12. Dabei kann eine Höhenanpassung der Messplatte 22 vorgesehen sein, um jeweils die Kontaktfläche zuverlässig zu kontaktieren.

Figur 2 zeigt eine Situation, in der die Messplatte 22 in einer ersten Messposition zu erkennen ist, wie die separaten Kontaktelemente in Kontakt mit den Kontaktflächen an dem Stack gelangen. Deutlich wird auch, dass das Kontaktelement 24b in Kontakt mit der Kontaktfläche 12b (Kontaktfläche 12 b ist analog zu Figur 1) in seiner Winkelposition stärker angepasst ist als die anderen Kontaktelemente 24a, c. Bei der gleichzeitigen Messung von vielen Kontaktflächen an dem Stack wird die Messung also nicht gestört, wenn eine einzelne Kontaktfläche nicht exakt mit den anderen Kontaktflächen fluchtet, sondern vorsteht oder weiter eingezogen ist. Vereinfacht wird der Kontakt zudem vorteilhafterweise dadurch, dass die Kontaktflächen nur in jeder zweiten Ebene vorgesehen sind.

Figur 2 zeigt eine Halterung 30 für die Messplatte 22, die einen runden Querschnitt besitzt. Grundsätzlich kann auch ein anderer Querschnitt für die Halterung 30 in Betracht gezogen werden, wie beispielsweise ein rechteckiger oder ovaler Querschnitt.

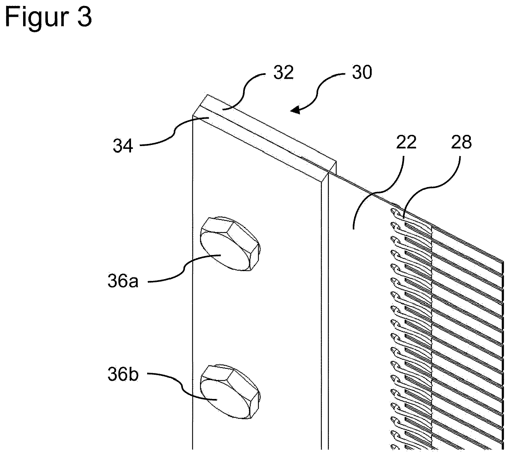

Figur 3 zeigt eine Halterung 30, die aus zwei Halteplatten 32, 34 aufgebaut ist. Zwischen die Halteplatten 32 und 34 ist die Messplatte 22 gespannt. Über Befestigungsmittel, wie beispielsweise Schrauben 36a, 36b sind die beiden Halteplatten 32 und 34 gegeneinander verspannt und halten die Messplatte 22. Die Schrauben können auch durch die Messplatte 22 geführt sein.

Zusammenfassend kann festgehalten werden, dass die gezeigte Messeinrichtung zur elektrischen Spannungsmessung an einem eine Vielzahl an Ebenen aufweisenden Stack nach dem Fügen des Stacks oder während des Betriebs einer Hochtemperaturelektrolyse ausgebildet ist.

Vorteilhafterweise ist die Platte und die Vielzahl von Kontaktelementen einstückig ausgebildet, wobei die Oberflächen der separaten Kontaktelemente jeweils voneinander elektrisch isoliert vorliegen. An ihren Messkontaktflächen _{[BU1]}sind die Kontaktelemente jeweils vorzugsweise mit einer elektrisch leitfähigen Beschichtung aus halbleitendem Material oder Metall versehen.

Dabei sollte die thermische Ausdehnung der Platte mit den Kontakteinheiten, also der Abstand der Kontakteinheiten zueinander, mit der thermischen Ausdehnung des Stacks übereinstimmen oder zumindest ähnlich sein.

Die Materialien der Halterung und der Platte müssen hinreichend stabil ausgebildet sein, vorteilhafterweise mit einer Streckgrenze von maximal 50 MPa, so dass bei metallischen Materialien die lokalen Spannungen unterhalb von 50 MPa bleiben.

Ein wichtiger Aspekt der Messeinrichtung ist dabei eine Halterung, die eine schwenkbar gelagerte Messplatte mit separaten Kontakteinheiten aufweist. Die Platte mit den Kontakteinheiten ist vom Aufbau her einem Kamm ähnlich, wobei die Kontakteinheiten durch parallele Schnitte, beispielsweise durch Laser hergestellt, in die Platte hergestellt werden können. Die Messeinrichtung kann in unmittelbarer Nähe zum Stack positioniert und vorteilhafterweise durch eine externe Servosteuerung an den Stack herangeschwenkt werden. Dabei wird als extern eine Anordnung außerhalb des Stacks betrachtet.

Die federnden Eigenschaften der Kontakteinheiten ermöglichen den Ausgleich von Stapeltoleranzen in der Stackebene. Als Stapeltoleranz wird die Toleranz betrachtet, die beim Übereinanderstapeln der einzelnen Ebenen zu einem Stack entsteht, wodurch nicht alle Ebenen kongruent übereinander angeordnet sind, sondern mit einer Varianz von beispielsweise einigen µm abweichen.

Die Messplatte mit den Kontakteinheiten wird zur Messung mit dem Motor angesteuert und um einen definierten Winkel gedreht, damit alle Kontakteinheiten in Kontakt mit jeweils einer Ebene des Stacks sind. Je nach Toleranzabweichung sind einige Kontakteinheiten mehr als andere deformiert.

Durch die Verwendung von Hochtemperaturkeramik ist dieser Prozess auch bei 1100°C voll reversibel. Die Keramik sollte einen möglichst gleichen thermischen Ausdehnungskoeffizienten wie der Stack haben, weshalb insbesondere 3YSZ (Yttrium stabilisiertes Zirkonoxid) verwendet werden kann.

Zur eigentlichen elektrischen Kontaktierung werden die Kontaktelemente der Messeinrichtung an ihren Messkontaktflächen leitfähig beschichtet, z.B. mit einem keramischen Halbleiter oder einem Metall. Eine getestete Möglichkeit ist uLSMC (unterstöchiometrisches Lanthan Strontium Mangan Cobalt Oxid). Platin wurde als metallische Alternative ebenso experimentell validiert. Die einzelnen Beschichtungen auf den Kontaktelementen können mittels Metalldrähten (vorteilhafterweise Edelmetall, z.B. Platin) als Kontaktleitungen kontaktiert werden, beispielsweise durch Einbetten in eine Paste. Die Paste kann die Beschichtung mit dem halbleitenden Material der Kontakteinheiten, beispielsweise uLSMC, sein.

Die Platindrähte werden aus der Hochtemperaturelektrolyse-Anlage geführt und vorteilhafterweise außerhalb dieser an die Messvorrichtung, insbesondere Spannungsmessvorrichtung, angeschlossen. Anschließend erfolgt die übliche Auswertung der gemessenen Informationen.

Zur Möglichkeit des Toleranzausgleiches in z-Richtung (also in Richtung der Stackhöhe): Durch die Einzelteiltoleranzen des Stacks sind über die Höhe (bis zu 1,2 m) Abweichungen der Lagen der Einzelebenen zu erwarten. Diese werden durch zwei Faktoren kompensiert. Zum einen sind die Kontakteinheiten optimiert, indem sie breiter als die Höhe der Ebenen sind und damit bei Abweichungen die Ebenen trotzdem kontaktieren.

Gleichermaßen muss der Abstand ausreichend groß gewählt werden, um nicht benachbarte Ebenen zu kontaktieren.

Besonders vorteilhafterweise kann mit der vorgestellten Messeinrichtung auch nur jede zweite Ebene kontaktiert werden, indem die Platte mit den Kontakteinheiten mehr Abstand zueinander haben oder die Kontakteinheiten doppelt so breit sein können. Auch können auf unterschiedlichen Seiten des Stacks die Messeinrichtungen positioniert werden, so kann auf einer Seite die Vorderseite und auf der anderen Seite die Rückseite des Stacks mit jeweils einer Messeinrichtung kontaktiert und gemessen werden. Vorteilhafterweise verbessert dies die Herstellbarkeit der Vorrichtung und den Toleranzausgleich signifikant.

Vorteile der Erfindung sind die Zeitersparnis sowie die Realisierung einer vollautomatisierten Messung.

Insbesondere wird durch die Erfindung die Industrialisierung der SOEC Technologie mit hohen Stacktürmen mit über 300 Ebenen, insbesondere 900 Ebenen, ermöglicht. Dabei kann ein Toleranzausgleich in Richtung der Stackrichtung von bis zu 5 % erzielt werden.

Weiter kann die erfindungsgemäße Messeinrichtung gegliedert sein, indem mehrere separate Messplatten jeweils höhenverschiebbar übereinander angeordnet sind, um so trotz der möglichen Höhenvarianz des Stacks die Messung zu ermöglichen. Vorteilhafterweise ist das Material der Beschichtung der Kontakteinheiten über die Temperaturänderungen und die Laufzeit des SOEC-Stacks stabil, insbesondere auch bei einer Betriebszeit von mehr als 300 Zyklen des SOEC-Stacks pro Jahr zyklenstabil.

Vorbeschriebene Erfindung ist gefördert und entstanden im Rahmen des BMBF-Vorhabens "Verbundvorhaben H2Giga - Teilvorhaben: Serienfertigung großskaliger HTEL-Stacks" mit dem Förderkennzeichen 03HY124A.

### Bezugszeichenliste

- 10: Stack
- 12a, b: Kontaktfläche
- 14a, b: Kontaktfläche
- 16a, b: Aussparung
- 20a, b: Ausnehmung
- 22: Messplatte
- 24a, b: Kontaktelement
- 26a, b: Schlitz
- 28a, b: Leitung
- 30: Halterung
- 32, 34: Halteplatte
- 36a, b: Schrauben

## Patentansprüche

1. Messeinrichtung zur elektrischen Spannungsmessung in einem Stack von übereinander in Ebenen angeordneten Membran-Elektroden-Einheiten (MEA), die jeweils zur Spannungsmessung mindestens eine Kontaktfläche aufweisen, die außen am Stack zugänglich angeordnet ist, wobei die Messeinrichtung eine Halterung besitzt, in der eine schwenkbare Messplatte mit separaten Kontaktelementen gelagert ist, von denen eine Vielzahl über jeweils eine Kontaktleitung mit einer Messauswertung elektrisch leitend verbunden ist, um die an dem jeweiligen Kontaktelement anliegende elektrische Spannung an die Messauswertung anzulegen, wobei die Messplatte in der Halterung in eine Messposition verschwenkt werden kann und die Kontaktelemente elastisch verformbar ausgebildet sind und in der Messposition unter Verspannen an den Kontaktflächen anliegen.

2. Messeinrichtung nach Anspruch 1, **dadurch gekennzeichnet, dass** in der Messposition die Kontaktelemente gegen die Kontaktflächen gedrückt sind und sich elastisch verformen.

3. Messeinrichtung nach Anspruch 1 oder 2, **dadurch gekennzeichnet, dass** in der Messposition die Kontaktelemente einen Winkel zwischen 1° und 60° aufweisen, bevorzugt von 1° bis 45° in ihrer verformten Position aufweisen.

4. Messeinrichtung nach einem der Ansprüche 1 bis 3, **dadurch gekennzeichnet, dass** die Messplatte eine elektrisch nicht-leitende Oberfläche aufweist.

5. Messeinrichtung nach einem der Ansprüche 1 bis 4, **dadurch gekennzeichnet, dass** die Messplatte aus einem Material besteht, das eine vorbestimmte Wärmeausdehnung besitzt, die im Wesentlichen einer Wärmeausdehnung des Stacks entspricht.

6. Messeinrichtung nach Anspruch 4 oder 5, **dadurch gekennzeichnet, dass** die Messplatte aus einem keramischen Material oder aus metallischem Material mit einer elektrischen Isolierung als Oberfläche besteht.

7. Messeinrichtung nach einem der Ansprüche 1 bis 6, **dadurch gekennzeichnet, dass** die Messplatte eine Dicke von 10 µm bis 3 mm aufweist.

8. Messeinrichtung nach einem der Ansprüche 1 bis 7, **dadurch gekennzeichnet, dass** die separaten Kontaktelemente eine Dicke von 10 µm bis 60 µm und eine Länge von 1 mm bis 10 mm aufweisen.

9. Messeinrichtung nach einem der Ansprüche 1 bis 8, **dadurch gekennzeichnet, dass** die Halterung aus einem temperaturstabilen Material besteht.

10. Messeinrichtung nach einem der Ansprüche 1 bis 9, **dadurch gekennzeichnet, dass** mindestens eine der Kontaktleitungen durch eine Bohrung in der Messplatte oder in dem Kontaktelement zu dem entsprechenden Kontaktelement geführt ist.

11. Messeinrichtung nach einem der Ansprüche 1 bis 10, **dadurch gekennzeichnet, dass** die Messplatte aus einem temperaturbeständigen Material besteht, das in einem Temperaturbereich zwischen 800° C und 1100° C elastisch verformbar ist, wobei das temperaturbeständige Material insbesondere Aluminiumoxid Al2O3, undotiertes Zirconiumoxid ZrOx, Yttrium stabilisiertes Zirconiumdioxid 3YSZ oder eine metallische Legierung mit einer entsprechenden Isolierung aufweist.

12. Messeinrichtung nach einem der Ansprüche 1 bis 11, **dadurch gekennzeichnet, dass** die Kontaktelemente aus einem halbleitenden Material, insbesondere einer halbleitenden Oxidkeramik, wie unterstöchiometrisches Lanthan Strontium Mangan Cobalt Oxid (uLSMC), Lanthan Strontium Mangan Cobalt Oxid (LSMC), Mangan Cobalt Eisenoxid (MCF) oder Lanthan Strontium Manganit (LSM), oder aus einem Metall der Platingruppe oder eine Legierung der Metalle der Platingruppe bestehen.

13. Messeinrichtung nach einem der Ansprüche 1 bis 12, **dadurch gekennzeichnet, dass** die Kontaktelemente eine Beschichtung mit einem Halbleiterkeramikmaterial aufweisen, das bevorzugt einen Kontaktwiderstand von weniger als 1 MOhm, vorzugsweise zwischen 1 und 20 Ohm besitzt.

14. Messeinrichtung nach einem der Ansprüche 1 bis 13, **dadurch gekennzeichnet, dass** die Halterung Mittel zur Höhenverstellung der Messplatte aufweist, um die separaten Kontaktelemente in der Höhe relativ zu den Kontaktflächen des Stacks auszurichten.
